# EUROPÄISCHE PATENTANMELDUNG

(11) **EP 2 260 998 A1**
(43) Veröffentlichungstag der Anmeldung: **15.12.2010**
(21) Anmeldenummer: 10005260.4
(22) Anmeldetag: 20.05.2010
(51) Int. Cl.: B29C 45/20, B29C 45/27

(54) **Spritzgießvorrichtung, Spritzgießdüse und Verteiler**

(30) Priorität: 12.06.2009 DE 102009025165
(71) Anmelder: Günther Heisskanaltechnik GmbH, 35066 Frankenberg/Eder (DE)
(72) Erfinder: Sommer, Siegrid, 35099 Burgwald (DE); Schnell, Torsten, 35104 Lichtenfels (DE); Günther, Herbert, 35108 Allendorf (DE)
(74) Vertreter: Buchhold, Jürgen

(57) **Zusammenfassung**

Bei einer Spritzgießvorrichtung 10 für ein Spritzgießwerkzeug, mit einem Strömungskanal 20 für eine fließfähige Masse, wobei der Strömungskanal 20 eine Einlassöffnung 20 und eine in einer Formangussöffnung 31 eines Formnestes 30 des Spritzgießwerkzeugs mündende Auslassöffnung 22 aufweist und zumindest abschnittsweise in einem Verteiler 120 und/oder einer Spritzgießdüse 110 ausgebildet ist, und mit einer Heizvorrichtung 130 für die fließfähige Masse, weisen vorteilhafterweise der Verteiler 120, die Spritzgießdüse 110 und/oder die Heizvorrichtung 130 wenigstens ein wärmeleitfähiges Element 50 aus einem anisotropen Material auf. Insbesondere ist es günstig, wenn das wärmeleitfähige Element 50 in einem mit dem Strömungskanal 20 in Kontakt stehenden Bauteil des Verteilers 120 und/oder der Spritzgießdüse 110 integriert und/oder darauf aufgebracht ist. Man erkennt außerdem, dass es von besonderem Vorteil ist, wenn das anisotrope Material wenigstens eine hochwärmeleitende Richtung mit einer Wärmeleitfähigkeit von mehr als 500 W/mK, bevorzugt mehr als 1000 W/mK, besonders bevorzugt mehr als 1500 W/mK aufweist. Man erkennt darüber hinaus, dass die Verwendung eines solchen anisotropen Materials zum gerichteten Wärmetransport in einer Spritzgießvorrichtung, sowie die Verwendung eines anisotropen Materials zum gerichteten Wärmetransport in einer Spritzgießdüse und die Verwendung eines anisotropen Materials zum gerichteten Wärmetransport in einem erfindungsgemäßen Verteiler von besonderem Vorteil sind.

## Beschreibung

Die Erfindung betrifft eine Spritzgießvorrichtung gemäß dem Oberbegriff von Anspruch 1, eine Spritzgießdüse für eine Spritzgießvorrichtung gemäß dem Oberbegriff von Anspruch 5, einen Verteiler für eine Spritzgießvorrichtung gemäß dem Oberbegriff von Anspruch 9 sowie die Verwendung eines anisotropen Materials in einer Spritzgießvorrichtung, einer Spritzgießdüse und einem Verteiler entsprechend den Ansprüchen 12, 13 und 14.

Spritzgießvorrichtungen werden in der Regel eingesetzt, um eine fließfähige Masse bei einer vorgebbaren Temperatur unter hohem Druck einem trennbaren Werkzeugblock bzw. Formeinsatz zuzuführen. Wesentliche Bestandteile einer solchen Vorrichtung sind dabei meist mindestens ein Verteiler und mindestens eine Spritzgießdüse. In der Spritzgießvorrichtung ist üblicherweise außerdem wenigstens ein Strömungskanal für die fließfähige Masse ausgebildet, der sich durch Verteiler und Spritzgießdüsen bis hin zur Angussöffnung im Formeinsatz erstreckt. Um die fließfähige Masse innerhalb des Strömungskanals auf einer vorgebbaren Temperatur halten zu können, sind entlang des Strömungskanals im Bereich der Verteiler und Spritzgießdüsen Heizvorrichtungen angeordnet. Problematisch ist es dabei jedoch, auch diejenigen Abschnitte des Strömungskanals ausreichend zu beheizen, die beispielsweise aufgrund begrenzter Platzverhältnisse oder einer exponierten Lage in der Peripherie der Vorrichtung das Anbringen einer Heizung nicht erlauben.

So sieht beispielsweise DE-U1-295 01 450 eine elektrische Heizung vor, die den gewöhnlich aus Werkzeugstahl gefertigten Düsenkörper einer Spritzgießdüse konzentrisch umgibt. Der Strömungskanal setzt sich am formnestseitigen Ende des Düsenkörpers in einem Düsenmundstück fort. Damit sich das Formnest nicht aufheizt, sorgt ein schmaler Luftspalt zwischen Düsenmundstück und dem Formeinsatz für die notwendige thermische Trennung zwischen Spritzgießdüse und Werkzeug. Gleichzeitig besteht jedoch das Problem, dass die fließfähige Masse in diesem Übergangsbereich zwischen der beheizten Spritzgießdüse und dem kühl zu haltenden Formnest auf der gewünschten Temperatur gehalten werden muss. Man fertigt daher das Düsenmundstück aus einem hoch wärmeleitenden Material und versieht es mit einer Düsenspitze. Diese Düsenspitze ragt in die aus der Düse austretende fließfähige Masse und soll die Wärme vom beheizten Düsenkörper in die Masse weitergeben.

Von Nachteil hierbei ist, dass insbesondere das Düsenmundstück keine sehr hohe Verschleißfestigkeit aufweist. Die Standzeit der Spritzgießdüse ist daher relativ gering, insbesondere dann, wenn aggressive und abrassive Materialien zu verarbeiten sind.

Ein weiterer Nachteil solcher herkömmlicher Spritzgießdüsen besteht darin, dass der Wärmeübergang von dem Materialrohr auf das separate Düsenmundstück nicht immer optimal ist. Außerdem wird ausgerechnet die vom Materialrohr am entferntesten liegende Düsenspitze am schlechtesten mit Wärme versorgt.

Problematisch ist weiterhin der Raum, den herkömmliche Heizvorrichtungen einnehmen, so ist es beispielsweise bei der Mehrfachanspritzung von Werkstücken wünschenswert, viele Spritzgießdüsen auf engem Raum neben einander anzuordnen. Um eine optimale Versorgung dieser Spritzgießdüsen mit fließfähiger Masse zu gewährleisten, ist jedoch ein balanciertes Verteilersystem notwendig. Dies kann häufig nur mit einer Vielzahl von verschachtelten Verteilerplatten gelöst werden, was sich bei zusätzlich noch benötigten Heizvorrichtungen für die Verteilerplatten höchst ungünstig auf den Raumbedarf des Verteilers auswirkt.

Ein weiterer Nachteil herkömmlicher Heizvorrichtungen sind der zusätzliche Energiebedarf - beispielsweise bei elektrischen Heizwendeln - und der hohe Bedarf an Regeltechnik. Darüber hinaus besteht häufig die Notwendigkeit eine entsprechende Ausnehmung im Werkzeug bereitzustellen, in welche die Düse samt Heizung eingepasst werden kann. Dies kann im Ernstfall zu Lasten der Stabilität des Werkzeuges gehen.

Aufgabe der Erfindung ist es daher, diese und weitere Nachteile des Standes der Technik zu beseitigen und eine Spritzgießvorrichtung zu schaffen, die mit einfachen Mitteln herzustellen ist und einen optimale Beheizung des Strömungskanals in allen Bauteilen gewährleistet. Insbesondere soll die Heizvorrichtung möglichst raumsparend gefertigt werden können und gleichzeitig eine optimale Versorgung auch entfernt liegender Düsenbauteile ermöglichen.

Hauptmerkmale der Erfindung sind im kennzeichnenden Teil der Ansprüche 1, 5 und 9, sowie in den Ansprüche 12 bis 14 angegeben. Ausgestaltungen sind Gegenstand der Ansprüche 2 bis 4, 6 bis 8, 10, 11, und 15.

Bei einer Spritzgießvorrichtung für ein Spritzgießwerkzeug, mit einem Strömungskanal für eine fließfähige Masse, wobei der Strömungskanal eine Einlassöffnung und eine in einer Formangussöffnung eines Formnestes des Spritzgießwerkzeugs mündende Auslassöffnung aufweist und zumindest abschnittsweise in einem Verteiler und/oder einer Spritzgießdüse ausgebildet ist, und mit einer Heizvorrichtung für die fließfähige Masse, sieht die Erfindung vor, dass der Verteiler, die Spritzgießdüse und/oder die Heizvorrichtung wenigstens ein wärmeleitfähiges Element aus einem anisotropen Material aufweisen.

Ein solches wärmeleiffähiges Element dient vorteilhaft dazu, die Wärme einer Wärmequelle an die kritischen zü beheizenden Bauteile einer erfindungsgemäßen Spritzgießvorrichtung zu transportieren. So kann mit seiner Hilfe beispielsweise der Wärmetransport von einem beheizten Düsenkörper einer Spritzgießdüse in die nicht beheizte Düsenspitze unterstützt und verbessert werden.

Ist das wärmeleitfähige Element zudem - insbesondere bevorzugt in Bezug auf seine Wärmeleitfähigkeit - aus einem anisotropen Material, so bietet es den großen Vorteil, dass ein gerichteter Transport von Wärme in hohem Umfang von einem Bauteil der Spritzgießvorrichtung zu einem anderen ermöglicht wird, ohne dass es einer zusätzlichen Heizung bedarf. Auf diese Weise kann beispielsweise eine zur Heizvorrichtung gehörende Heizung, die als Wärmequelle dient, in einer Gewissen Entfernung vom eigentlich zu heizenden Bauteil angeordnet werden. In der Folge wird durch die Heizung auch kein Raum beansprucht. Man erkennt leicht, dass es günstig ist, wenn das wärmeleitfähige Element in einem mit dem Strömungskanal in Kontakt stehenden Bauteil des Verteilers und/oder der Spritzgießdüse integriert und/oder darauf aufgebracht ist. Weiterhin sind die Heißkanalbauteile wartungsfreundlicher, da aufgrund der deutlich verbesserten Effektivität der Wärmeverteilung weit aus weniger Heizungen und Temperaturfühler zum Einsatz kommen müssen, die in Ihrer Funktion anfälliger im Bezug auf Ausfall sind.

Von besonderem Vorteil ist es außerdem, wenn das anisotrope Material eine hochwärmeleitende Richtung mit einer Wärmeleitfähigkeit von mehr als 500 W/mK, bevorzugt mehr als 1000 W/mK, besonders bevorzugt mehr als 1500 W/mK aufweist. Bei einem solchen Material handelt es sich vorzugsweise um einen pyrolytischen Graphit, beispielsweise TPG. Denkbar sind jedoch auch andere natürliche oder künstlich hergestellte Materialien wie z.B. Kohlenstoffnanoröhren. Zur Verarbeitung kann das Material in Streifen geschnitten werden Auch das Granulieren ist vorstellbar. Handelt es sich beispielsweise bei dem wärmeleitfähigen Element um einen stabförmigen Streifen aus in einer Richtung hochwärmeleitendem Material, so kann die Richtung, in welcher das Material die Wärme besonders gut leitet, mit der Längsachse des Materialstabes zusammenfallen. Der Stab kann dann derart in einer Spritzgießvorrichtung angeordnet werden, dass sein eines Ende an einem gut und einfach zu beheizenden Bauteil anliegt. Das andere Ende kann in einen mit einer herkömmlichen Heizung schwer zu erreichenden Bereich hineinragen. Von diesem Ende aus breitet sich dann die Wärme in dem ebenfalls zu beheizenden, jedoch schwer zugänglichen Bauteil aus. Aufgrund der extrem hohen Wärmeleitfähigkeit des anisotropen Materials wird dabei eine gegenüber dem Stand der Technik wesentlich verbesserter Wärmeübertragung erreicht.

Man erkennt, dass es ein großer Vorteil der Erfindung darin liegt, dass Bauteile ohne eigene Heizung - beispielsweise Düsenmundstücke oder im Inneren eines mehrschichtigen Verteilers angeordnete Verteilerplatten - derart gut mit Wärme versorgt werden können, dass sie aus normalem Werkzeugstahl gefertigt werden können und nicht mehr aus hochwärmeleitfähigem Material sein müssen. In der Folge sind die Bauteile deutlich verschleißfester und längere Standzeiten der Spritzgießvorrichtungen sind möglich.

Man erkennt weiter, dass es zweckmäßig ist, wenn die Heizvorrichtung wenigstens eine Heizung aufweist, wobei die Heizung mittelbar oder unmittelbar derart mit dem wärmeleitfähigen Element verbunden ist, dass die Wärme in der hochwärmeleitenden Richtung durch das wärmeleitfähige Element geleitet wird.

Die Erfindung sieht weiter vor, dass bei einer Spritzgießdüse für eine erfindungsgemäße Spritzgießvorrichtung, mit einem Strömungskanal für eine fließfähige Masse, wobei der Strömungskanal eine Einlassöffnung und eine in einer Formangussöffnung eines Formnestes mündende Auslassöffnung aufweist und zumindest abschnittsweise in einem Düsenkörper ausgebildet ist, und mit einer Heizvorrichtung für die fließfähige Masse, der Düsenkörper und/oder die Heizvorrichtung wenigstens ein wärmeleitfähiges Element aus einem anisotropen Material aufweisen.

Zweckmäßig umfasst der Düsenkörper ein einstückiges Materialrohr oder ein Materialrohr mit einer separate Düsenspitze oder ein Materialrohr mit einer separaten Düsenspitze und mindestens einem weiteren Düsenabschnitt, wobei das wärmeleitfähige Element im Materialrohr, in der Düsenspitze oder in dem mindestens einen weiteren Düsenabschnitt integriert oder darauf aufgebracht ist.

Wie bereits für die Spritzgießvorrichtung dargestellt, ist es auch hier von Vorteil, wenn das anisotrope Material eine hochwärmeleitfähige Richtung mit einer Wärmeleitfähigkeit von mehr als 500 W/mK, bevorzugt mehr als 1000 W/mK, besonders bevorzugt mehr als 1500 W/mK aufweist. Man erkennt, dass es sich auch hier günstigerweise um einen pyrolytischen Graphit, bspw. TPG handelt.

Dabei weist die Heizvorrichtung auch hier günstigerweise wenigstens eine Heizung auf, wobei die Heizung mittelbar oder unmittelbar derart mit dem wärmeleitfähigen Element verbunden ist, dass die Wärme in der einen Richtung durch das wärmeleitfähige Element geleitet wird.

Weiter sieht die Erfindung vor, dass bei einem Verteiler für eine erfindungsgemäße Spritzgießvorrichtung, mit einem Strömungskanal für eine fließfähige Masse, wobei der Strömungskanal eine Einlassöffnung und eine in einen weiteren Verteiler oder in eine Spritzgießdüse mündende Austrittsöffnung aufweist und mit einer Heizvorrichtung für die fließfähige Masse, der Verteiler und/oder die Heizvorrichtung wenigstens ein wärmeleitfähiges Element aus einem anisotropen Material aufweisen.

Auch in Bezug auf einen erfindungsgemäßen Verteiler erkennt man nach dem oben bereits ausgeführten leicht, dass es von Vorteil ist, wenn das wärmeleitfähige Element in einem mit dem Strömungskanal in Kontakt stehenden Bauteil des Verteilers und/oder der Spritzgießvorrichtung integriert und/oder darauf aufgebracht ist und/oder wenn die Heizvorrichtung wenigstens eine Heizung aufweist, wobei die Heizung mittelbar oder unmittelbar derart mit dem wärmeleitfähigen Element verbunden ist, dass die Wärme in der einen Richtung durch das wärmeleitfähige Element geleitet wird.

Dabei ist es wiederum günstig, dass das anisotrope Material eine hochwärmeleitfähige Richtung mit einer Wärmeleitfähigkeit von mehr als 500 W/mK, bevorzugt mehr als 1000 W/mK, besonders bevorzugt mehr als 1500 W/mK aufweist.

Außerdem sieht die Erfindung die Verwendung eines anisotropen Materials zum gerichteten Wärmetransport in einer Spritzgießvorrichtung vor, sowie die Verwendung eines anisotropen Materials zum gerichteten Wärmetransport in einer Spritzgießdüse und die Verwendung eines anisotropen Materials zum gerichteten Wärmetransport in einem erfindungsgemäßen Verteiler.

Vorteilhaft weist das anisotrope Material eine hochwärmeleitfähige Richtung mit einer Wärmeleitfähigkeit von mehr als 500 W/mK, bevorzugt mehr als 1000 W/mK, besonders bevorzugt mehr als 1500 W/mK auf.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1a: ein Ausführungsbeispiel für ein in einer materialführenden Düsenspitze einer Spritzgießdüse integriertes wärmeleitfähiges Element,
- Fig. 1b: einen Querschnitt durch den Düsenspitzenbereich des Ausführungsbeispiels von Fig. 1a,
- Fig. 2a: ein Ausführungsbeispiel für ein in einer nicht-materialführenden Düsenspitze einer Spritzgießdüse integriertes wärmeleitfähiges Element,
- Fig. 2b: eine Detailansicht des Düsenspitzenbereichs des Ausführungsbeispiels von Fig. 2a,
- Fig. 3: einen am Formanguss eines Formnests enden Strömungskanal mit einem wärmeleitfähigen Element, das zwischen einem Materialrohr und einem Düsenmund- stück einer Nadelverschlussdüse aufgebracht ist,
- Fig. 4: eine Spritzgießdüse mit auf dem Materialrohr angeordnetem wärmeleitfähigen Ele- ment,
- Fig. 5: eine weitere Spritzgießdüse mit auf dem Materialrohr angeordnetem wärmeleitfähi- gem Element zur Verbindung zweier Heizungen,
- Fig. 6a: ein Materialrohr einer Spritzgießdüse mit mehreren sequentiell aufgebrachten wärme- leitfähigen Elementen, und

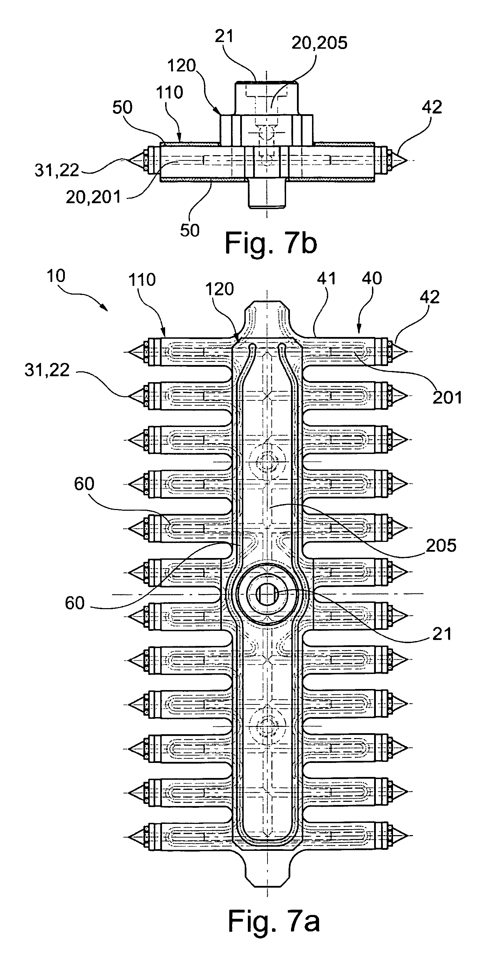

- Fig. 6b: ein weiteres Materialrohr einer Spritzgießdüse mit aufgebrachten wärmeleitfähigen Elementen; Fig. 7 eine Spritzgießvorrichtung mit mehreren an einem Verteiler angeordneten Spritzgießdüsen.

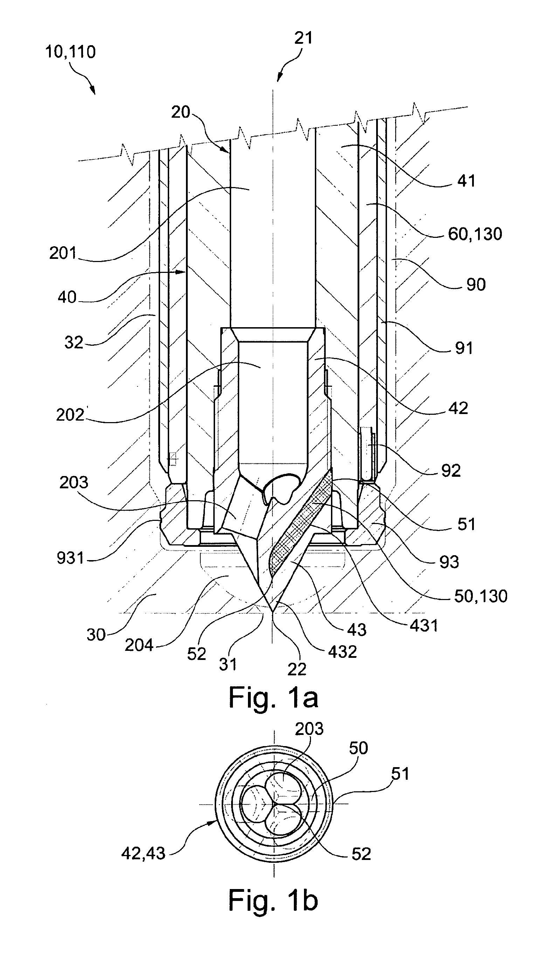

Der in Fig. 1a dargestellte Ausschnitt einer Spritzgießvorrichtung 10 zeigt das untere Ende einer Spritzgießdüse 110. Diese hat einen Düsenkörper 40, bestehend aus einem Materialrohr 41 und einem in das untere Ende des Materialrohres 41 eingesetzten Düsenmundstück 42. An dem Düsenmundstück 42 ist eine materialführende Düsenspitze 43 ausgebildet. Mit deren Hilfe soll die fließfähige Masse zunächst in den Bereich 204 des Strömungskanals 20 zwischen der Spritzgießdüse 110 und der Formangussöffnung 31 gebracht werden. Dort soll die fließfähige Masse die Düsenspitze 43 umströmen und dadurch auf der für die Verarbeitung notwendigen Temperatur gehalten werden.

Erfindungsgemäß ist der genannte Bereich 204 Teil eines in der Spritzgießdüse 110 ausgebildeten Strömungskanals 20. Dieser beginnt an einer - beispielsweise an einen Verteiler 120 oder an eine Maschinendüse grenzenden - Einlassöffnung 21 mit einem ersten im Materialrohr 41 ausgebildeten Abschnitt 201. Er setzt sich mit einen weiteren Abschnitt 202 im Düsenmundstück 42 fort, gefolgt von wenigstens einem Abschnitt 203 in der Düsenspitze 43. Im Übergangsbereich zwischen der Spritzgießdüse 110 und dem Formnest 30 wird der Strömungskanal 20 dann vom Bereich 204 gebildet.

Um die fließfähige Masse entlang des gesamten Strömungskanals 20 stets auf der optimalen Temperatur zu halten, ist die Spritzgießdüse 110 mit einer Heizvorrichtung 130 ausgebildet. Diese besteht aus einer Heizung 60 und einem wärmeleitfähigen Element 50. Die bei der Heizung 60 handelt es sich um eine handelsübliche Heizung für eine Heißkanaldüse. Diese ist auf das Materialrohr 41 aufgeschoben. Das wärmeleitfähige Element 50 ist ein Stab aus pyrolytischem oder thermo-pyrolytischem Graphit, der in einer Ausnehmung 431 der Düsenspitze 43 integriert ist. Dabei hat das wärmeleitfähige Element 50 an seinem einen Ende einen Kontaktbereich 51 an dem es mit dem Materialrohr 41 in Kontakt steht. An seinem anderen Ende bildet es eine Kontaktspitze 52 mit dem Material der Düsenspitze 43. Wie insbesondere in Fig. 1b erkennbar, kann die Düsenspitze 43 dabei mit drei Abschnitten 203 des Strömungskanals 20 ausgebildet sein, die von der eigentlichen Spitze weg nach außen hin verlaufen. Das wärmeleitfähige Element 50 ist dagegen derart angeordnet, dass es die Wärme gerade nach innen zur Spitze hin leitet. Vorteilhafterweise sind dazu im gezeigten Ausführungsbeispiel drei wärmeleitende Elemente 50 derart zwischen den drei Abschnitten 203 des Strömungskanals 20 angeordnet, dass sich die Kontaktspitzen 52 in der Mitte der Düsenspitze 43 treffen. Mithin ist eine besonders effektive und gleichmäßige Wärmezufuhr von allen Seiten her möglich. Man erkennt außerdem, dass die wärmeleitenden Elemente 50 über die gesamte Mantelfläche aufgrund entsprechender Passungsauswahl an der Spitze 43 anliegen können.

Besonders günstig ist es, wenn der hoch-anisotrope Graphitstab derart orientiert ist, dass er in der Richtung R, die zwischen dem Kontaktbereich 51 mit dem Materialrohr 41 und der Kontaktspitze 52 verläuft hochwärmeleitfähig ist. Mithin hat das wärmeleitende Element 50 in dieser Richtung eine Wärmeleitfähigkeit von über 1000 W/mK, bei einer Verwendung von thermo-pyrolytischem Graphit sogar von über 1500 W/mK.

Die Wärme des durch die Heizung 60 auf die optimale Temperatur gebrachten Materialrohres 41 wird auf diese Weise am Kontaktbereich 51 durch das wärmeleitende Element 50 aufgenommen und unmittelbar zur Kontaktspitze 52 geleitet. Dort wird die Wärme nahezu ohne Verluste an das Material der Düsenspitze 43 abgegeben. Das Düsenmundstück 42 heizt sich dadurch insbesondere im Bereich der Spitze 432 auf. In der Folge wird die fließfähige Masse über den gesamten Strömungskanal 20 hinweg bis in den besonders kritischen Bereich 204 zwischen Spritzgießdüse 110 und Formnest 30 auf der für die Verarbeitung optimalen Temperatur gehalten. Gleichzeitig entfällt die Notwendigkeit, das Düsenmundstück 42 oder zumindest die Düsenspitze 43 aus einem hochwärmeleitfähigen Material zu fertige. Stattdessen ist es mit Hilfe des erfindungsgemäßen wärmeleitfähigen Elementes 50 möglich, dass die Düsenspitze 43 - wie beispielsweise auch für Materialrohr 41 und Verteiler 120 üblich - aus einem herkömmlichen Werkzeugstahl gefertigt wird. Dieser ist in der Regel deutlich verschleißfester und kostengünstiger als entsprechende hochwärmeleitfähige Materialien.

Man erkennt, dass die erfindungsgemäße Spritzgießdüse 110 und damit auch die erfindungsgemäße Spritzgießvorrichtung 10 als großen Vorteil ein wärmeleitendes Element 50 aus einem anisotropen Material bietet, mit dessen Hilfe eine Düsenmundstück 42 zum Einsatz kommen kann, die aus einem kostengünstigen verschleißfestem Material gefertigt werden kann und bei dem dennoch eine optimale Temperierung bis in den äußersten Bereich der Düsenspitze 43 erreicht wird.

Man erkennt weiter, dass das Materialrohr 41 eine Wärmebrücke zwischen der Heizung 60 und dem wärmeleitfähigen Element 50 bildet und die Heizung 60 daher nur mittelbar mit dem wärmeleitfähigen Element 50 in Kontakt steht.

Die Fig. 1a offenbart weiterhin, dass die Spritzgießdüse 10 in einer Ausnehmung 32 des Formnests 30 eingesetzt ist. Zur Sicherung und Zentrierung der Spritzgießdüse 10 ist im unteren Bereich der Ausnehmung 32 ein Stütz- und Dichtring 93 eingesetzt, auf welchem sich das Materialrohr 41 und die Heizung 60 abstützen. Der Stütz- und Dichtring 93 begrenzt gleichzeitig den Bereich 204 und verhindert so, dass die fließfähige Masse in einen Luftspalt 90 eindringt, der zwischen der Spritzgießdüse 10 und dem Formnest 30 zur Isolierung ausgebildet ist. Dies wird insbesondere durch einen am Stütz- und Dichtring 93 ausgebildeten Rand 931 begünstigt, der derart passgenau in der Ausnehmung 32 eingesetzt ist, dass er beim Erreichen der Betriebstemperatur einen dichtenden Abschluss mit der Innenwand der Ausnehmung 32 des Formnest 30 bildet.

Daneben erkennt man ebenfalls in Fig. 1a, dass die Heizung 60 mit einem Schutzrohr 91 und einem Thermofühler 92 versehen sein kann.

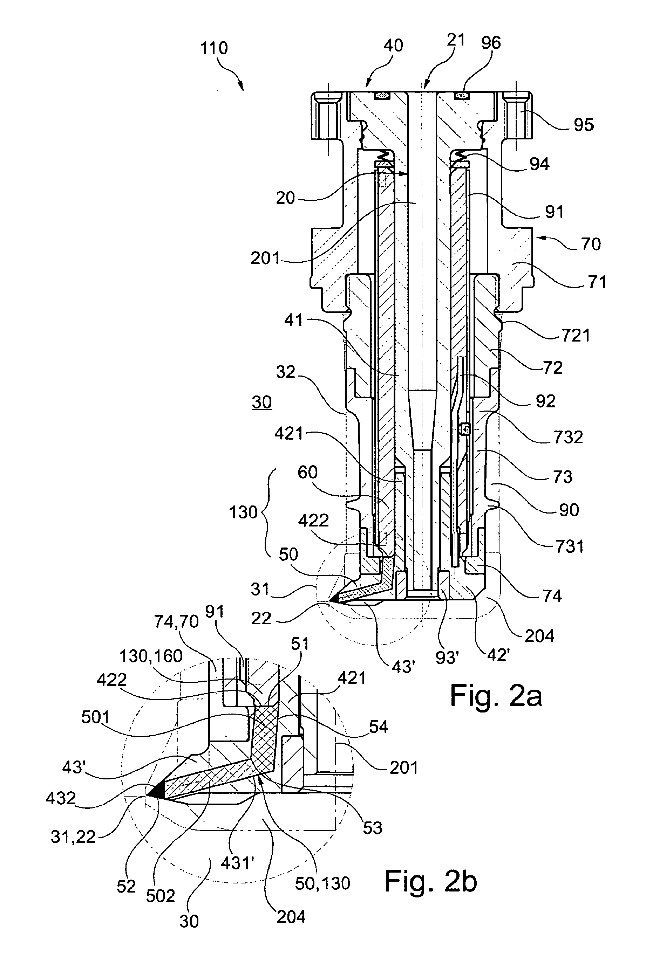

In einem weiteren - in den Fig. 2a und 2b dargestellten - Ausführungsbeispiel steht die Heizung 60 unmittelbar mit dem wärmeleitfähigen Element 50 in Kontakt. Auch die hier dargestellte erfindungsgemäßen Spritzgießdüse 110 ist für den Einsatz in einer erfindungsgemäßen Spritzgießvorrichtung 10 vorgesehen.

Die Spritzgießdüse 110 hat ein Gehäuse 70, welches aus mehreren Gehäuseabschnitten 71, 72, 73, 74 besteht, und ist - wie auch die im vorherigen Ausführungsbeispiel gezeigte Spritzgießdüse 110 - in eine Ausnehmung 32 im Formnest 30 eingesetzt. Verschiedene Stütz- und Dichtvorsprünge 731, 732, 721 richten die Spritzgießdüse 110 dabei in der Ausnehmung 32 aus und sorgen für einen sicheren Sitz sowie für die Abdichtung des isolierenden Luftspaltes 90, welcher sich zwischen der Spritzgießdüse 110 und dem Formnest 30 befindet. Die Spritzgießdüse 110 kann beispielsweise mit Hilfe von Befestigungselementen 95 an einem (nicht dargestellten) Verteiler festgelegt werden, wobei eine Dichtung 96 verhindert, dass fließfähige Masse zwischen der Spritzgießdüse 110 und dem Verteiler austreten kann.

In dem Gehäuse 70 der Spritzgießdüse 110 ist der Düsenkörper 40 angeordnet. Dieser hat ein Materialrohr 41 auf dessen unterem Bereich ein Endstück 42' mit wenigstens einer, bevorzugt mehreren Düsenspitzen 43' aufgesetzt ist. Das Endstück 42' wird mit Hilfe des Rings 93' vor Verschleiß geschützt.

Man erkennt, dass der Strömungskanal 20 an einer Einlassöffnung 21 beginnt. Dort kann er beispielsweise durch einen Strömungskanal eines erfindungsgemäßen Verteilers gespeist werden. Im Anschluss an die Einlassöffnung 21 weist der Strömungskanal 20 in dem Materialrohr 41 einen Abschnitt 201 auf, der unmittelbar in den Bereich 204 des Strömungskanals 20 zwischen der Spritzgießdüse 110 und der Formangussöffnung 31 mündet. Die fließfähige Masse umströmt die Düsenspitzen 43' und gelangt von dort an der Formangussöffnung 31 durch die Austrittsöffnung 22 des Strömungskanals 20 in die (nicht dargestellte) Gussform.

Um die fließfähige Masse auf der gewünschten Temperatur zu halten ist wiederum eine Heizvorrichtung 130 vorgesehen, bestehend aus einer Heizung 60 und wärmeleitfähigen Elementen 50. Die Heizung 60 ist auf das Materialrohr 41 aufgeschoben und mit einem Schutzrohr 91 umgeben. In die Heizung 60 kann ein Thermofühler 92 integriert sein. Zwischen der Heizung 60 und dem Kopf des Materialrohres 41 sind Federn 94 angeordnet. Diese belasten die Heizung 60 in Richtung auf die Formangussöffnung 31, so dass das untere Ende der Heizung 60 auf einen Absatz 422 des Endstückes 42' gedrückt wird.

Man erkennt sowohl in Fig. 2a als auch im Detail in Fig. 2b, dass in dem Endstück 42' für jede Düsenspitze 43' ein wärmeleitfähiges Element 50 integriert ist. Das Endstück 42' hat dafür im Bereich jeder Düsenspitze 43' eine winkelförmige Ausnehmung 431'. Es ist dann beispielsweise denkbar, dass das wärmeleitfähige Element 50 im einfachsten Fall aus zwei Stiften 501, 502 besteht. Jeder der Stifte 501, 502 ist in einen Schenkel der winkelförmigen Ausnehmung 431' eingesetzt, so dass die Stifte 501, 502 im Scheitelpunkt aneinander liegen und eine Kontaktfläche 53 aufweisen. Der erste Stift 501 steht dabei außerdem mit der Heizung 60 in einem Bereich 51 in Kontakt, der zweite Stift 502 in einem Bereich 52 mit der Spitze 432 der Düsenspitze 43'.

Man erkennt, dass es auch hier besonders günstig ist, wenn das wärmeleitfähige Element 50 aus einem thermisch anisotropen Material ist, welches jeweils in der Richtung, die zwischen den Kontaktbereichen 51, 52 und der Kontaktfläche 53 verläuft, hochwärmeleitfähig ist. Mithin hat das wärmeleitfähige Element 50 in dieser Richtung - wenn es sich beispielsweise um einen pyrolytischen Graphit handelt - eine Wärmeleitfähigkeit von über 1000 W/mK, bei einer Verwendung von thermo-pyrolytischem Graphit sogar von über 1500 W/mK.

Die Wärme der Heizung 60 wird auf diese Weise am Kontaktbereich 52 unmittelbar durch das wärmeleitfähige Element 50, nämlich durch den ersten Stift 501, aufgenommen, zur Kontaktfläche 53 geleitet und dort auf den zweiten Stift 502 übertragen. Dieser leitet die Wärme zum Kontaktbereich 52 und heizt so die Spitze 432 der Düsenspitze 43' höchst effektiv auf. Insgesamt wird so die Wärme von der Heizung 60 nahezu ohne Verluste auf die Düsenspitze 43' übertragen, ohne dass die Düsenspitze 43' dazu extra aus einem hochwärmeleitfähigen Material sein muss. Mithin kann die Düsenspitze 43' aus einem herkömmlichen Werkzeugstahl gefertigt wird. Dieser ist in der Regel deutlich verschleißfester und kostengünstiger als entsprechende hochwärmeleitfähige Materialien.

Denkbar ist es bei dieser Lösung selbstverständlich auch, dass das wärmeleitfähige Element 50 aus einem durchgängigen winkelförmigen Stück besteht. Auch kann die Wärme nicht nur unmittelbar von der Heizung 60 übernommen werden, sondern auch vom Halsbereich 421 des Endstückes 42', welcher ebenfalls mit der Heizung 60 in Kontakt steht. Zwischen Halsbereich 421 und wärmeleiffähigem Element 50 kann dann die Wärme über den Kontaktbereich 54 übertragen werden.

Vorstellbar ist auch, dass die winkelförmige Ausnehmung 431' nicht mit einem Stift, sondern mit einem Granulat des gewünschten Materials befüllt wird.

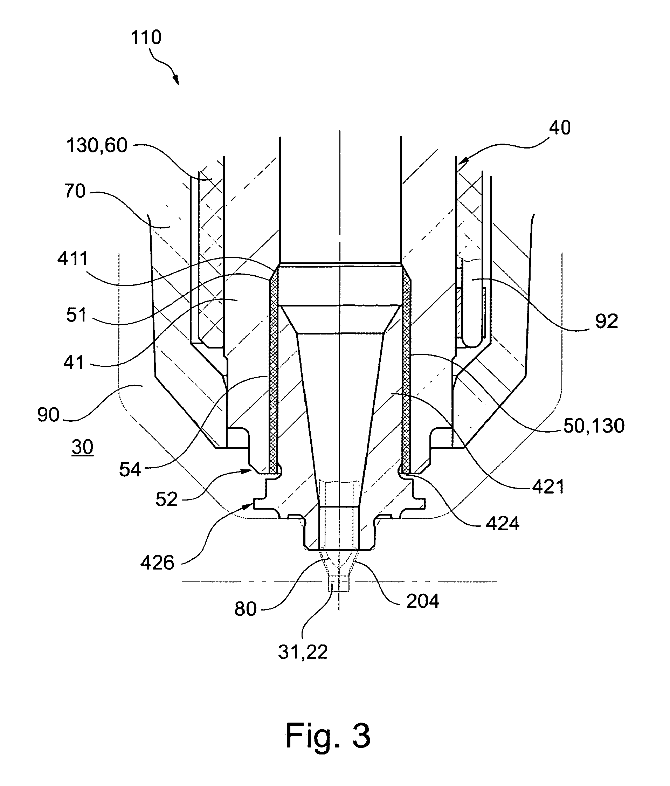

Eine weitere Variante zur Anordnung des wärmeleitfähigen Elementes 50 in einer Spritzgießdüse 110 ist die in Fig. 3 dargestellte Ummantelung eines Düsenmundstückes 42 einer Nadelverschlussdüse, welches in das untere Ende eines Materialrohres 41 eingesetzt ist. Man erkennt auch hier, dass der Strömungskanal 20 eine Abschnitt 201 im Materialrohr 41, einen Abschnitt 202 im Düsenmundstück 42 und einen Bereich 204 zwischen der Spritzgießdüse 110 und der Formangussöffnung 31 aufweist. Die Formangussöffnung 31 ist in diesem Beispiel mit Hilfe einer Verschlussnadel 80 verschließbar. Die fließfähige Masse soll hier bis zum Bereich 204 hin durch das Düsenmundstück 42 auf der optimalen Temperatur gehalten werden, daher ist es notwendig, das Düsenmundstück 42 selbst ebenfalls möglichst gut mit Wärme zu versorgen.

Die Erfindung löst dies zunächst, in dem wie bereits in den vorherigen Ausführungsbeispielen im Inneren des Gehäuses 70 eine Heizung 60 auf dem Materialrohr 41 angeordnet wird. Zur Übertragung der Wärme von dem Materialrohr 41 auf das Düsenmundstück 42 dient dann wiederum das wärmeleitfähige Element 50. Dieses umgibt den im Materialrohr 41 eingeschobenen Halsabschnitt 421 des Düsenmundstückes. Dabei kann es sich sowohl um eine komplette Ummantelung als auch um abschnittsweise eingelassene Stifte oder Streifen eines thermisch-anisotropen Materials handeln. Das wärmeleitfähige Element 50 liegt dabei einerseits an einem Absatz 411 im Materialrohr an, so dass dort ein erster Kontaktbereich 51 gebildet wird. Andererseits kann das wärmeleitfähige Element 50 mit einem Flanschabsatz 424 des Düsenmundstückes 42 einen zweiten Kontaktbereich 52 bilden. Verläuft die hochwärmeleitende Richtung des anisotropen Materials nun in der Richtung vom ersten Kontaktbereich 51 zum zweiten Kontaktbereich 52, so wird insbesondere der untere und aus der Spritzgießdüse 110 hervorstehende Bereich 426 des Düsenmundstückes 42 gut mit Wärme versorgt. Mithin gelingt es die fließfähige Masse auch in diesem kritischen Abschnitt 202 des Strömungskanals 20 stets auf der optimalen Temperatur zu halten. Gleichzeitig kann das Düsenmundstück 42 ohne Rücksicht auf eventuelle Wärmeleitungseigenschaften aus einem verschleißfesten Material gefertigt werden.

Denkbar ist darüber hinaus auch, dass die hochwärmeleitfähige Richtung senkrecht zur Richtung zwischen den Kontaktbereichen 51 und 52 verläuft. In diesem Fall wird die Wärme des Materialrohres über den seitlichen Kontaktbereich 54 aufgenommen und auf der diesem Bereich gegenüberliegenden Seite des wärmeleitfähigen Elementes 50 an den Halsabschnitt 421 abgegeben. Auch dies führt zu einer höchst effektiven Aufheizung des Düsenmundstückes 42 der Nadelverschlussdüse.

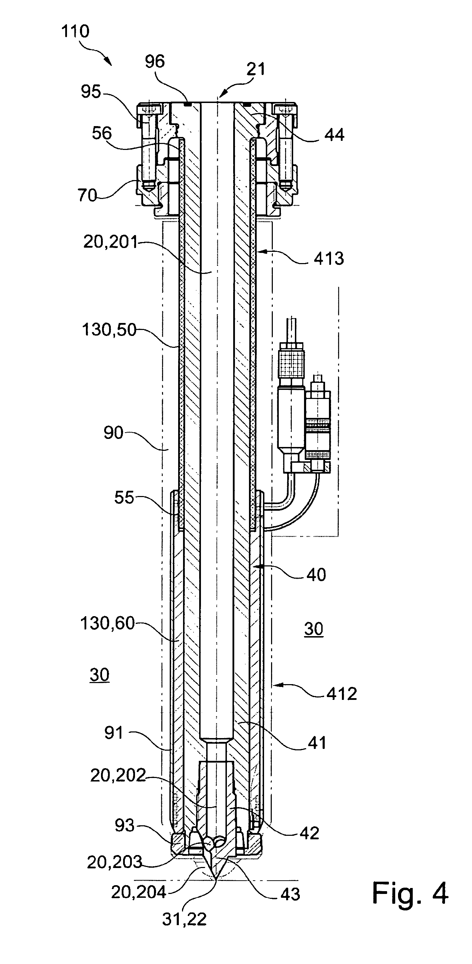

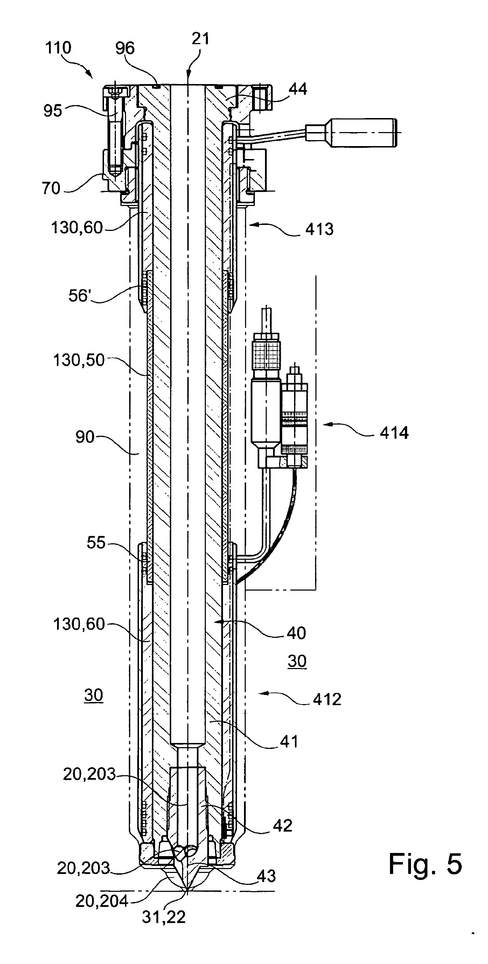

Wie in den Figuren 4 und 5 dargestellt, kann das erfindungsgemäße wärmeleitfähige Element 50 bei einer erfindungsgemäßen Spritzgießdüse 110 auch im Bereich des Materialrohres 41 angeordnet werden. Insbesondere bei langen Düsen kann damit die Beheizung des Materialrohres 41 dahingehend optimiert werden, dass einerseits eine gleichmäßige Wärmeverteilung entlang des gesamten Materialrohres 41 erreicht wird, und andererseits möglichst wenig Raum durch die Heizung 60 beansprucht wird.

Im Ausführungsbeispiel, das in Fig. 4 dargestellt ist, ist dazu eine Heizvorrichtung 130 vorgesehen, bei der im unteren 412 Bereich der Spritzgießdüse 110 auf dem Materialrohr 41 eine Heizung 60 angeordnet ist. Diese Heizung 60 steht mit einem rund um den oberen Bereich 413 des Materialrohres 41 angeordneten wärmeleitfähigen Element 50 in einem Kontaktbereich 55 in Kontakt. Das wärmeleitfähige Element 50 leitet die Wärme wiederum höchst effektiv zu einem Kontaktbereich 56, der zwischen dem wärmeleitfähigen Element 50 und dem Kopf 44 des Materialrohres 41 ausgebildet ist. Auf diese Weise wird das Materialrohr 41 bis hinauf in den Kopf 44 optimal mit Wärme versorgt, ohne dass das unmittelbare Anordnen einer Heizung 60 in diesem oberen Bereich 413 zwingend erforderlich ist. Dies wirkt sich positiv auf dem Raumbedarf der Spritzgießdüse 110 aus. Diese kann in der Folge deutlich schlanker gestaltet werden. Des Weiteren wird nur ein minimaler Aufwand an Regeltechnik benötigt.

Man erkennt, dass sich bei dieser Bauform außerdem folgender Vorteil ergeben kann. Wird - wie erfindungsgemäß vorgesehen - nämlich ein thermisch anisotropes Material verwendet, welches insbesondere in der Richtung zwischen den Kontaktbereichen 55 und 56 hochwärmeleitfähig ist und das in der quer dazu verlaufenden Richtung schlecht wärmeleitfähig ist, so wird einerseits die Wärme optimal von der Heizung 60 zum zu heizenden Kopf 44 des Materialrohres 41 transportiert.

Man erkennt, dass sich die Wärme auf diese Weise vom Kopf 44 des Materialrohres 41 und vom durch die Heizung 60 beheizten unteren Bereich 412 des Materialrohres 41 in den oberen Bereich 413 des Materialrohres 41 sehr gleichmäßig erstrecken kann, ohne dass es beispielsweise zu einem ungewollten Wärmepeak in der Mitte des betreffenden Bereichs 413 kommt. Gleichzeitig kann das Materialrohr 41 in diesem Bereich nur wenig Wärme nach außen abgeben und so verlieren. Die von der Heizung 60 aufgebrachte Wärme kann daher sehr effektiv genutzt werden.

Das in Fig. 5 dargestellte Ausführungsbeispiel unterscheidet sich von dem oben beschriebenen der Fig. 4 lediglich dadurch, dass zwischen dem wärmeleitenden Element 50 und dem Kopf 44 des Materialrohres 41 zusätzlich eine weitere Heizung 61 angeordnet ist. Auch hier wird die Wärme der Heizungen 60, 61 - wie bereits oben dargestellt - sehr effektiv genutzt und es werden Wärmepeaks insbesondere im mittleren Bereich 414 des Materialrohres 41 effektiv vermieden. Mithin kann die fließfähige Masse entlang des gesamten im Materialrohr 41 ausgebildeten Abschnitts 201 des Strömungskanals 20 auf einer gleichmäßigen und optimalen Temperatur gehalten werden.

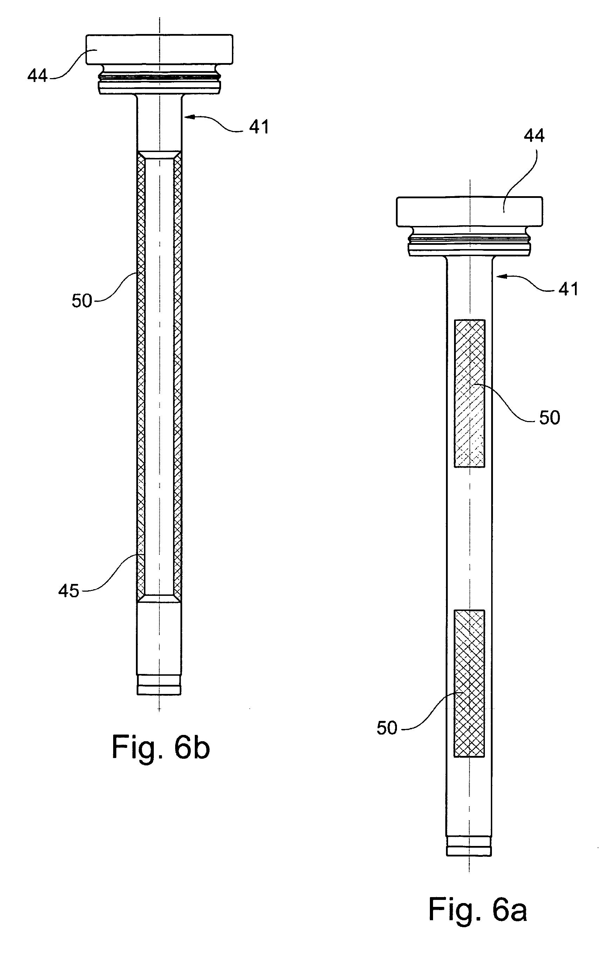

Für die Anordnung des wärmeleitfähigen Elementes 50 auf dem Materialrohr 41 sind wiederum verschiedene Möglichkeiten vorstellbar. So können wie in Fig. 6a dargestellt abschnittsweise Streifen eines erfindungsgemäßen Materials auf der Außenseite des Materialrohres 41 aufgebracht sein. Denkbar ist auch dass das Materialrohr 41, wie in Fig. 6b dargestellt in dem Bereich verjüngt ist, in welchem das wärmeleitfähige Element 50 angeordnet werden soll. Das wärmeleitfähige Element 50 kann dann beispielsweise in Form einer Ummantelung mit dem erfindungsgemäßen Material in die Verjüngung 45 eingebracht werden.

Bei einer sich aus dem Stand der Technik bekannten Anordnung einer Vielzahl von Spritzgießdüse 110 an einem Verteiler 120 weist der Strömungskanal 20 eine Einlassöffnung 21 auf. Durch diese kann der Strömungskanal 20 beispielsweise durch eine Maschinendüse oder durch einen weiteren Verteiler mit fließfähiger Masse versorgt werden. Von der Einlassöffnung 21 aus setzt sich der Strömungskanal 20 zunächst in einem Abschnitt 205 im Verteiler 120 fort. Von dort aus gelangt die fließfähige Masse in die in den jeweiligen Materialrohren 41 der Spritzgießdüsen 110 ausgebildeten Abschnitte 201. Der Strömungskanal 20 endet bei jeder Spritzgießdüse 110 in einer Austrittsöffnung 22, die an der Formangussöffnung 31 gelegen ist.

Erfindungsgemäß kann bei dieser Ausführungsvariante beispielsweise der Verteiler 120 mit einer Heizung 60 ausgestattet sein. Auf den Materialrohren 41 der Spritzgießdüsen 110 können dann wärmeleitfähige Elemente 50 angebracht sein. Diese transportieren die von der Heizung 60 erzeugte Wärme dann höchst platzsparend und effektiv zum Bereich der Düsenspitzen 43 der Spritzgießdüsen 110.

Die Erfindung ist nicht auf eine der vorbeschriebenen Ausführungsformen beschränkt, sondern in vielfältiger Weise abwandelbar.

So ist es selbstverständlich denkbar, dass in einer Spritzgießvorrichtung wärmeleitfähige Elemente 50 sowohl im Bereich der Düsenspitzen 43, 43' - in den Figuren 1 bis 3 dargestellt - als auch gleichzeitig im Bereich des Materialrohres 41 und/oder im Bereich des Verteilers 120 angeordnet werden.

Man erkennt, dass bei einer Spritzgießvorrichtung 10 für ein Spritzgießwerkzeug, mit einem Strömungskanal 20 für eine fließfähige Masse, wobei der Strömungskanal 20 eine Einlassöffnung 20 und eine in einer Formangussöffnung 31 eines Formnestes 30 des Spritzgießwerkzeugs mündende Auslassöffnung 22 aufweist und zumindest abschnittsweise in einem Verteiler 120 und/oder einer Spritzgießdüse 110 ausgebildet ist, und mit einer Heizvorrichtung 130 für die fließfähige Masse, vorteilhafterweise der Verteiler 120, die Spritzgießdüse 110 und/oder die Heizvorrichtung 130 wenigstens ein wärmeleitfähiges Element 50 aus einem anisotropen Material aufweisen. Insbesondere ist es günstig, wenn das wärmeleitfähige Element 50 in einem mit dem Strömungskanal 20 in Kontakt stehenden Bauteil des Verteilers 120 und/oder der Spritzgießdüse 110 integriert und/oder darauf aufgebracht ist. Man erkennt außerdem, dass es von besonderem Vorteil ist, wenn das anisotrope Material eine hochwärmeleitende Richtung mit einer Wärmeleitfähigkeit von mehr als 500 W/mK, bevorzugt mehr als 1000 W/mK, besonders bevorzugt mehr als 1500 W/mK aufweist. Günstig ist darüber hinaus, dass die Heizvorrichtung 130 wenigstens eine Heizung 60 aufweist, wobei die Heizung 60 mittelbar oder unmittelbar derart mit dem wärmeleitfähigen Element 50 verbunden ist, dass die Wärme in der einen Richtung durch das wärmeleitfähige Element 50 geleitet wird.

Man erkennt weiter dass bei einer Spritzgießdüse 110 für eine erfindungsgemäße Spritzgießvorrichtung, mit einem Strömungskanal 20 für eine fließfähige Masse, wobei der Strömungskanal 20 eine Einlassöffnung 21 und eine in einer Formangussöffnung 31 eines Formnestes 30 mündende Auslassöffnung 22 aufweist und zumindest abschnittsweise in einem Düsenkörper 40 ausgebildet ist, und mit einer Heizvorrichtung 130 für die fließfähige Masse, der Düsenkörper 40 und/oder die Heizvorrichtung 130 zweckmäßig wenigstens ein wärmeleitfähiges Element 50 aus einem anisotropen Material aufweisen, wobei der Düsenkörper 40 ein einstückiges Materialrohr 41 oder ein Materialrohr 41 mit einem separate Düsenmundstück 42 oder ein Materialrohr 41 mit einem separaten Düsenmundstück 42 und mindestens einem weiteren Düsenabschnitt umfasst, wobei das wärmeleitfähige Element 50 im Materialrohr 41, in dem Düsenmundstück 42 oder in dem mindestens einen weiteren Düsenabschnitt integriert oder darauf aufgebracht ist. Dabei ist es insbesondere von Vorteil, wenn das anisotrope Material eine hochwärmeleitfähige Richtung mit einer Wärmeleitfähigkeit von mehr als 500 W/mK, bevorzugt mehr als 1000 W/mK, besonders bevorzugt mehr als 1500 W/mK aufweist. Zweckmäßig weist die Heizvorrichtung 130 wenigstens eine Heizung 60 auf, wobei die Heizung 60 mittelbar oder unmittelbar derart mit dem wärmeleitfähigen Element 50 verbunden ist, dass die Wärme in der einen Richtung durch das wärmeleitfähige Element 50 geleitet wird.

Man erkennt weiter, dass es bei einem Verteiler 120 für eine erfindungsgemäße Spritzgießvorrichtung, mit einem Strömungskanal 20 für eine fließfähige Masse, wobei der Strömungskanal 20 eine Einlassöffnung 21 und eine in einen weiteren Verteiler oder in eine Spritzgießdüse mündende Austrittsöffnung 22 aufweist und mit einer Heizvorrichtung 60 für die fließfähige Masse, von Vorteil ist, dass der Verteiler 120 und/oder die Heizvorrichtung 130 wenigstens ein wärmeleitfähiges Element 50 aus einem anisotropen Material aufweisen. Dabei ist das wärmeleitfähige Element 50 zweckmäßig in einem mit dem Strömungskanal 20 in Kontakt stehenden Bauteil des Verteilers 120 oder der Spritzgießvorrichtung integriert und/oder darauf aufgebracht ist und/oder die Heizvorrichtung 130 weist wenigstens eine Heizung 60 auf, wobei die Heizung 60 mittelbar oder unmittelbar derart mit dem wärmeleitfähigen Element 50 verbunden ist, dass die Wärme in der einen Richtung durch das wärmeleitfähige Element 50 geleitet wird. Günstig ist es, wenn das anisotrope Material eine hochwärmeleitfähige Richtung mit einer Wärmeleitfähigkeit von mehr als 500 W/mK, bevorzugt mehr als 1000 W/mK, besonders bevorzugt mehr als 1500 W/mK aufweist.

Man erkennt darüber hinaus, dass die Verwendung eines anisotropen Materials zum gerichteten Wärmetransport in einer Spritzgießvorrichtung, sowie die Verwendung eines anisotropen Materials zum gerichteten Wärmetransport in einer Spritzgießdüse und die Verwendung eines anisotropen Materials zum gerichteten Wärmetransport in einem erfindungsgemäßen Verteiler von besonderem Vorteil sind. Dies ist insbesondere der Fall, wenn das anisotrope Material eine hochwärmeleitfähige Richtung mit einer Wärmeleitfähigkeit von mehr als 500 W/mK, bevorzugt mehr als 1000 W/mK, besonders bevorzugt mehr als 1500 W/mK aufweist.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

**Bezugszeichenliste**

| | | | |
|---|---|---|---|
| 10 | Spritzgießvorrichtung | 44 | Kopf |
| 110 | Spritzgießdüse | | |
| 120 | Verteiler | 50 | wärmeleitfähiges Element |
| 130 | Heizvorrichtung | 501 | erster Stift |
| | | 502 | zweiter Stift |
| 20 | Strömungskanal | 51 | Kontaktbereich |
| 201 | Abschnitt | 52 | Kontaktspitze |
| 202 | Abschnitt | 53 | Kontaktfläche |
| 203 | Abschnitt | 54 | Kontaktbereich |
| 204 | Bereich | 55 | Kontaktbereich |
| 205 | Abschnitt | 56 | Kontaktbereich |
| 21 | Einlassöffnung | | |
| 22 | Austrittsöffnung | 60 | Heizung |
| | | 61 | Heizung |
| 30 | Formnest | | |
| 31 | Formangussöffnung | 70 | Gehäuse |
| 32 | Ausnehmung | 71 | Gehäuseabschnitt |
| | | 72 | Gehäuseabschnitt |
| 40 | Düsenkörper | 73 | Gehäuseabschnitt |
| 41 | Materialrohr | 74 | Gehäuseabschnitt |
| 411 | Absatz | 731 | Stütz- und Dichtvorsprung |
| 412 | Unterer Bereich | 732 | Stütz- und Dichtvorsprung |
| 413 | Oberer Bereich | 721 | Stütz- und Dichtvorsprung |
| 414 | Mittlerer Bereich | | |
| 42 | Düsenmundstück | 80 | Verschlussnadel |
| 42' | Endstück | | |
| 421 | Halsabschnitt | 90 | Luftspalt |
| 422 | Absatz | 91 | Schutzrohr |
| 424 | Flanschabsatz | 92 | Thermofühler |
| 426 | Bereich | 93 | Stütz- und Dichtring |
| 43 | Düsenspitze | 93' | Stütz- und Dichtring |
| 43' | Düsenspitze | 931 | Rand |
| 431 | Ausnehmung | 94 | Feder |
| 431' | winkelförmige Ausnehmung | 95 | Befestigungselement |
| 432 | Spitze | 96 | Dichtung |

## Patentansprüche

1. Spritzgießvorrichtung (10) für ein Spritzgießwerkzeug, mit einem Strömungskanal (20) für eine fließfähige Masse, wobei der Strömungskanal (20) eine Einlassöffnung (21) und eine in einer Formangussöffnung (31) eines Formnestes (30) des Spritzgießwerkzeugs mündende Auslassöffnung (22) aufweist und zumindest abschnittsweise in einem Verteiler (120) und/oder einer Spritzgießdüse (110) ausgebildet ist, und mit einer Heizvorrichtung (130) für die fließfähige Masse, **dadurch gekennzeichnet, dass** der Verteiler (120), die Spritzgießdüse (110) und/oder die Heizvorrichtung (130) wenigstens ein wärmeleiffähiges Element (50) aus einem anisotropen Material aufweisen.

2. Spritzgießvorrichtung (10) nach Anspruch 1, **dadurch gekennzeichnet, dass** das wärmeleitfähige Element (50) in einem mit dem Strömungskanal (20) in Kontakt stehenden Bauteil des Verteilers (120) und/oder der Spritzgießdüse (110) integriert und/oder darauf aufgebracht ist.

3. Spritzgießvorrichtung (10) nach einem der Ansprüche 1 oder 2, **dadurch gekennzeichnet, dass** das anisotrope Material wenigstens eine hochwärmeleitende Richtung mit einer Wärmeleitfähigkeit von mehr als 500 W/mK, bevorzugt mehr als 1000 W/mK, besonders bevorzugt mehr als 1500 W/mK aufweist.

4. Spritzgießvorrichtung (10) nach einem der Ansprüche 1 bis 3, **dadurch gekennzeichnet, dass** die Heizvorrichtung (130) wenigstens eine Heizung (60) aufweist, wobei die Heizung (60) mittelbar oder unmittelbar derart mit dem wärmeleitfähigen Element (50) verbunden ist, dass die Wärme in der einen Richtung durch das wärmeleitfähige Element (50) geleitet wird.

5. Spritzgießdüse (110) für eine Spritzgießvorrichtung nach einem der Ansprüche 1 bis 4, mit einem Strömungskanal (20) für eine fließfähige Masse, wobei der Strömungskanal (20) eine Einlassöffnung (21) und eine in einer Formangussöffnung (31) eines Formnestes (30) mündende Auslassöffnung (22) aufweist und zumindest abschnittsweise in einem Düsenkörper (40) ausgebildet ist, und mit einer Heizvorrichtung (130) für die fließfähige Masse, **dadurch gekennzeichnet, dass** der Düsenkörper (40) und/oder die Heizvorrichtung (130) wenigstens ein wärmeleitfähiges Element (50) aus einem anisotropen Material aufweisen.

6. Spritzgießdüse nach Anspruch 5, **dadurch gekennzeichnet, dass** der Düsenkörper (40) ein einstückiges Materialrohr (41) oder ein Materialrohr (41) mit einem separaten Düsenmundstück (42) oder ein Materialrohr (41) mit einem separaten Düsenmundstück (42) und mindestens einem weiteren Düsenabschnitt umfasst, wobei das wärmeleitfähige Element (50) im Materialrohr (41), in dem Düsenmundstück (42) oder in dem mindestens einen weiteren Düsenabschnitt integriert oder darauf aufgebracht ist.

7. Spritzgießdüse nach einem der Ansprüche 5 oder 6, **dadurch gekennzeichnet, dass** das anisotrope Material wenigstens eine hochwärmeleitfähige Richtung mit einer Wärmeleitfähigkeit von mehr als 500 W/mK, bevorzugt mehr als 1000 W/mK, besonders bevorzugt mehr als 1500 W/mK aufweist.

8. Spritzgießdüse nach einem der Ansprüche 5 bis 7, **dadurch gekennzeichnet, dass** die Heizvorrichtung (130) wenigstens eine Heizung (60) aufweist, wobei die Heizung (60) mittelbar oder unmittelbar derart mit dem wärmeleitfähigen Element (50) verbunden ist, dass die Wärme in der einen Richtung durch das wärmeleitfähige Element (50) geleitet wird.

9. Verteiler (120) für eine Spritzgießvorrichtung nach einem der Ansprüche 1 bis 4, mit einem Strömungskanal (20) für eine fließfähige Masse, wobei der Strömungskanal (20) eine Einlassöffnung (21) und eine in einen weiteren Verteiler oder in eine Spritzgießdüse mündende Austrittsöffnung (22) aufweist und mit einer Heizvorrichtung (130) für die fließfähige Masse, **dadurch gekennzeichnet, dass** der Verteiler (120) und/oder die Heizvorrichtung (130) wenigstens ein wärmeleiffähiges Element (50) aus einem anisotropen Material aufweisen.

10. Verteiler nach Anspruch 9, **dadurch gekennzeichnet,**
■ **dass** das wärmeleitfähige Element (50) in einem mit dem Strömungskanal (20) in Kontakt stehenden Bauteil des Verteilers (120) und/oder der Spritzgießvorrichtung (10) integriert und/oder darauf aufgebracht ist und/oder ■ dass die Heizvorrichtung (130) wenigstens eine Heizung (60) aufweist, wobei die Heizung (60) mittelbar oder unmittelbar derart mit dem wärmeleitfähigen Element (50) verbunden ist, dass die Wärme in der einen Richtung durch das wärmeleitfähige Element (50) geleitet wird.

11. Verteiler nach einem der Ansprüche 9 oder 10, **dadurch gekennzeichnet, dass** das anisotrope Material eine hochwärmeleitfähige Richtung mit einer Wärmeleitfähigkeit von mehr als 500 W/mK, bevorzugt mehr als 1000 W/mK, besonders bevorzugt mehr als 1500 W/mK aufweist.

12. Verwendung eines anisotropen Materials zum gerichteten Wärmetransport in einer Spritzgießvorrichtung.

13. Verwendung eines anisotropen Materials zum gerichteten Wärmetransport in einer Spritzgießdüse.

14. Verwendung eines anisotropen Materials zum gerichteten Wärmetransport in einem Verteiler entsprechend einem der Ansprüche 9 bis 11.

15. Verwendung nach einem der Ansprüche 12 bis 14, **dadurch gekennzeichnet, dass** das anisotrope Material wenigstens eine hochwärmeleitfähige Richtung mit einer Wärmeleitfähigkeit von mehr als 500 W/mK, bevorzugt mehr als 1000 W/mK, besonders bevorzugt mehr als 1500 W/mK aufweist.
